# FASCICULE DE BREVET EUROPEEN

(11) **EP 1 124 711 B1**
(45) Date de publication et mention de la délivrance du brevet: **17.08.2005**
(21) Numéro de dépôt: 99950887.2
(22) Date de dépôt: 29.10.1999
(51) Int. Cl.: B60S 1/08

(54) **PROCEDE DE COMMANDE D'UN ESSUIE-GLACE DE VEHICULE**
VERFAHREN ZUM STEUERN EINES KRAFTFARZEUGSCHEIBENWISCHERS
METHOD FOR CONTROLLING A MOTOR VEHICLE WIPER

(30) Priorité: 29.10.1998 FR 9813578
(43) Date de publication de la demande: 22.08.2001
(73) Titulaire: VALEO SYSTEMES D'ESSUYAGE, 78321 La Verrière (FR)
(72) Inventeur: COURDIER, Paul, F-37390 Mettray (FR); GOUGEON, Philippe, F-86550 Mignaloux (FR)
(74) Mandataire: Lemaire, Marc
(86) Numéro de dépôt international: PCT/FR1999/002657
(87) Numéro de publication internationale: WO 2000/026069

(56) Documents cités:
- WO-A-98/29285
- DE-A- 3 441 842
- FR-A- 2 736 023
- US-A- 5 654 617

## Description

L'invention concerne la commande des essuie-glaces d'un véhicule automobile.

Il est connu de commander le système d'essuie-glaces d'un véhicule depuis le tableau de bord au moyen d'un organe permettant de sélectionner différents modes de fonctionnement : arrêt, grande vitesse, petite vitesse, intermittent. Le choix de ces modes dépend de la quantité d'eau sur le pare-brise du véhicule qui elle-même est fonction d'un certain nombre de données dont les principales sont l'intensité de la pluie et le flux d'air généré par le mouvement du véhicule. La modification de ces conditions, notamment la première, est parfois très progressive et imperceptible de sorte que le conducteur dont l'attention est appelée au premier chef par la conduite du véhicule ne pense pas toujours au moment opportun à adapter le mode de fonctionnement du système d'essuie-glaces aux nouvelles conditions. On souhaite donc disposer d'un système assistant en totalité ou en partie le conducteur dans la commande du dispositif d'essuyage, la plupart des systèmes proposés jusqu'à présent n'ayant pas donné satisfaction.

On connaît le document US-A-5,654,617 qui décrit un dispositif de commande d'un système d'essuyage dans lequel le temps de balayage est mesuré pendant une partie substantielle des mouvements descendant et ascendant du balai d'essuie-glace.

On connaît également le document WO-A-9829285 qui décrit un dispositif de commande d'un système d'essuyage dans lequel un cycle de balayage est divisé en plusieurs intervalles. Les valeurs sont mesurées pendant chaque intervalle et comparées avec des seuils prédéterminés mémorisés pour cet intervalle.

On connaît le document FR-A-2.736.023 qui décrit un dispositif de protection d'un moteur d'essuie-glace et son procédé de commande. Pour commander le moteur, le temps de balayage est mesuré entre deux points d'arrêt fixe d'un balai d'essuyage. La vitesse du moteur est calculée sur la base de la valeur de temps de balayage mesuré.

Un but de l'invention est de fournir un système performant de commande d'essuie-glace.

En vue de la réalisation de ce but, on prévoit selon l'invention un procédé de commande d'un moteur d'essuie-glace de véhicule comprenant les étapes consistant à mesurer au moins une grandeur liée à un paramètre de fonctionnement du moteur et susceptible d'avoir plusieurs valeurs non nulles, effectuer une comparaison de la grandeur avec un seuil prédéterminé, et commander le moteur en fonction d'un résultat de la comparaison, dans lequel on mesure la grandeur lorsqu'un rotor du moteur occupe au moins une position de détermination correspondant à un point de détermination prédéterminé sur une trajectoire d'un balai entraîné par le moteur.

Ainsi, la mesure de la grandeur lorsque le balai se trouve à une position prédéterminée de sa trajectoire rend cette mesure particulièrement pertinente et, de plus, reproductible. La commande du moteur qui en découle est donc elle aussi pertinente, reproductible et fiable. Par comparaison, la mesure de la grandeur sur toute la trajectoire du balai et le calcul de la moyenne correspondante serait peu pertinents, voire trompeurs. Par exemple, au cours de la trajectoire du balai, le vent est susceptible tantôt de pousser le balai, tantôt de l'aider. Le calcul d'une moyenne peut donc conduire à rendre l'influence du vent indétectable. La décision de commande qui en découlerait ne serait donc pas pertinente.

Avantageusement, le moteur étant relié au balai par un embiellage, le point de détermination se trouve dans une zone quasi linéaire d'une fonction de transfert de l'embiellage.

Ainsi, la mesure de la grandeur est particulièrement pertinente.

Le paramètre pourra comprendre l'intensité d'un courant électrique d'alimentation du moteur.

En effet, cette grandeur est étroitement corrélée à la vitesse du moteur. Connaissant ainsi cette dernière, on peut la comparer à une valeur de consigne ou à un seuil et commander au besoin une modification du fonctionnement du moteur telle qu'une modification de la vitesse.

Le paramètre pourra également comprendre une vitesse du moteur et/ou une position d'un rotor du moteur.

Avantageusement, la grandeur est une moyenne de plusieurs valeurs du paramètre.

On évite ainsi de donner trop d'importance à une brusque variation intempestive en forme de pic.

Avantageusement, on effectue des comparaisons de la grandeur avec un seuil inférieur et un seuil supérieur prédéterminés et on commande le moteur en fonction de résultats des comparaisons.

Ainsi, on peut commander un changement de mode de fonctionnement du moteur.

Avantageusement, le moteur étant agencé pour fonctionner suivant au moins deux modes de fonctionnement associés à des plages de vitesses différentes et/ou à des procédures différentes, au moins l'un parmi les seuils inférieur et supérieur est prédéterminé en fonction d'un mode de fonctionnement courant du moteur.

Avantageusement, on mesure la grandeur lorsqu'un rotor du moteur a un sens de rotation correspondant à un sens de déplacement prédéterminé sur une trajectoire d'un balai entraîné par le moteur.

Avantageusement, le sens de déplacement est celui dans lequel le balai se déplace vers le bas d'un pare-brise du véhicule.

Ainsi, dans ce sens, le balai se déplace en sens contraire d'un flux d'air généré par le déplacement du véhicule roulant vers l'avant. Ce comportement du balai est plus représentatif des conditions de vitre que dans l'autre sens.

Avantageusement, on commande le moteur en fonction d'une donnée fournie par un organe de contrôle de l'essuie-glace accessible à un conducteur du véhicule.

Suivant la configuration choisie pour le système, on choisira l'ordre de priorité attaché en son sein à une commande venant d'un tel organe de commande.

Avantageusement, on commande le moteur en fonction d'une donnée fournie par un capteur de pluie.

Toutefois, de préférence, le capteur de pluie ne sera opérant qu'en liaison avec le démarrage du moteur.

Avantageusement, on commande le moteur en fonction d'une donnée représentative d'une vitesse de déplacement du véhicule.

Avantageusement, on commande deux moteurs d'essuie-glace du véhicule, et le procédé comprend les étapes consistant à déterminer des positions de rotors respectifs des moteurs, effectuer une comparaison des positions entre elles et/ou des comparaisons des positions avec des seuils de position respectifs prédéterminés, et commander au moins l'un des moteurs en fonction d'un résultat de la comparaison et/ou des résultats des comparaisons.

Sans nécessiter une liaison mécanique entre les balais, on assure donc un contrôle de la synchronisation de leurs mouvements, ce qui est important lorsque les balais sont associés au même pare-brise et ont des trajectoires sécantes.

Avantageusement, le paramètre étant une tension électrique à des bornes du moteur, on effectue une comparaison de la grandeur avec un seuil de saturation prédéterminé, et on commande un arrêt du moteur en fonction d'un résultat de la comparaison.

On prévient ainsi un endommagement du moteur d'essuyage résultant d'un blocage du balai.

Avantageusement, on commande un redémarrage du moteur après un intervalle de temps prédéterminé.

Avantageusement, l'étape de commande comprend le fait de modifier une vitesse du moteur.

Avantageusement, le moteur étant agencé pour fonctionner suivant au moins deux modes de fonctionnement associés à des plages de vitesses différentes et/ou à des procédures différentes, l'étape de commande comprend le fait de modifier une vitesse du moteur, et éventuellement, de changer un mode de fonctionnement courant du moteur.

Avantageusement, on commande le moteur lorsqu'un rotor du moteur occupe une position de commande correspondant à un point de commande prédéterminé sur une trajectoire d'un balai entraîné par le moteur.

Avantageusement, le point de commande est une extrémité de la trajectoire du balai.

Avantageusement, on commande le moteur de sorte que, pour une course d'un balai entraîné par le moteur dans un unique sens de déplacement d'une première extrémité à une deuxième extrémité de la course, le moteur a une première vitesse constante sur une première plus grande partie de la course, puis une deuxième vitesse constante inférieure à la première vitesse sur une deuxième partie de la course faisant suite à la première partie et précédant la deuxième extrémité.

On prévoit également selon l'invention un dispositif de commande d'un moteur d'essuie-glace de véhicule comprenant des moyens pour mesurer au moins une grandeur liée à un paramètre de fonctionnement du moteur et susceptible d'avoir plusieurs valeurs non nulles, des moyens pour effectuer une comparaison de la grandeur avec un seuil prédéterminé, des moyens pour commander le moteur en fonction d'un résultat de la comparaison, dans lequel les moyens pour mesurer ladite au moins une grandeur sont agencés pour mesurer la grandeur lorsqu'un rotor du moteur occupe au moins une position de détermination correspondant à un point de détermination prédéterminé sur une trajectoire d'un balai entraîné par le moteur.

On prévoit en outre selon l'invention un motoréducteur pour un essuie-glace de véhicule, comprenant un dispositif de commande selon l'invention.

D'autres caractéristiques et avantages de l'invention apparaîtront encore dans la description suivante d'un mode préféré de réalisation et de variantes donnés à titre d'exemples non limitatifs. Aux dessins annexés :
- la figure 1 est une vue d'un pare-brise avec la trajectoire des balais d'essuie-glace ;
- la figure 2 est un diagramme du principe de l'organisation du système de commande selon l'invention ;
- la figure 3 est un organigramme montrant la commande des changements de mode ; et

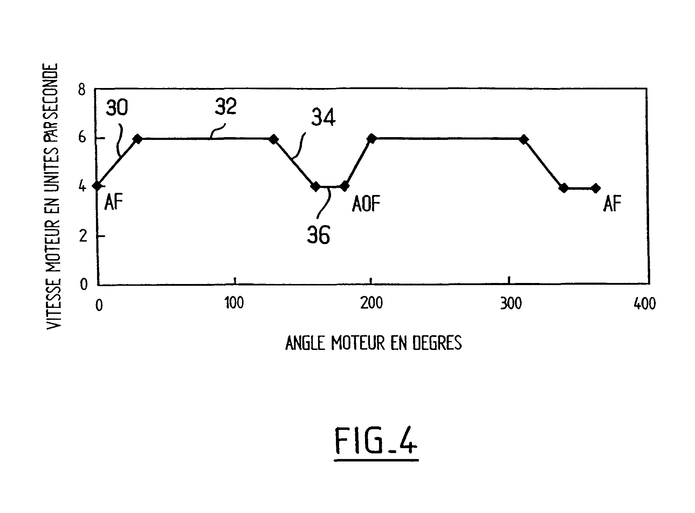

- la figure 4 est une courbe illustrant la vitesse du rotor en fonction de sa position angulaire.

On va décrire un mode de mise en oeuvre du procédé selon l'invention, utilisé pour la commande de deux balais d'essuie-glace de pare-brise avant sur un véhicule automobile. Ce procédé a pour fonction de maintenir en toutes circonstances la transparence du pare-brise avant 2 du véhicule. Le procédé assure la commande de deux sous-ensembles semblables associés à deux balais mobiles sur le pare-brise. Le balayage est de type antagoniste connu en soi. Les balais sont articulés autour de deux points situés près d'un bord inférieur 4 du pare-brise. Chaque sous-ensemble comprend un motoréducteur constitué d'un moteur 5 et d'un réducteur, un embiellage transmettant le mouvement généré par le moteur au balai, et une électronique de commande 6 ou CPU contrôlant le module d'alimentation en courant électrique ou module puissance 8 du moteur. Le motoréducteur et l'embiellage sont connus en soi. Les modules CPU 6 et de puissance 8 sont d'un type classique dans d'autres contextes faisant intervenir une commande électronique d'un moteur. Les deux sous-ensembles n'ont ici aucun lien mécanique l'un avec l'autre, mis à part leur fixation chacun à la caisse du véhicule.

Dans chaque sous-ensemble, le déplacement du balai sur le pare-brise est obtenu à partir d'un mouvement de rotation continu d'un rotor du moteur à l'aide de l'embiellage qui assure le changement de sens de rotation du balai aux extrémités de sa trajectoire. Les embiellages sont différents l'un de l'autre seulement par la configuration des bielles et manivelles les constituant. Ils assurent par principe, à la condition de faire tourner les moteurs toujours à la même vitesse angulaire, la non collision des balais sur le pare-brise. Toutefois, comme on le verra, le système prévoit une surveillance électronique de cette synchronisation. Chaque sous-ensemble comprend une platine servant de support et de radiateur au moteur 5, à l'étage de puissance 8, à la CPU 6 et à l'embiellage.

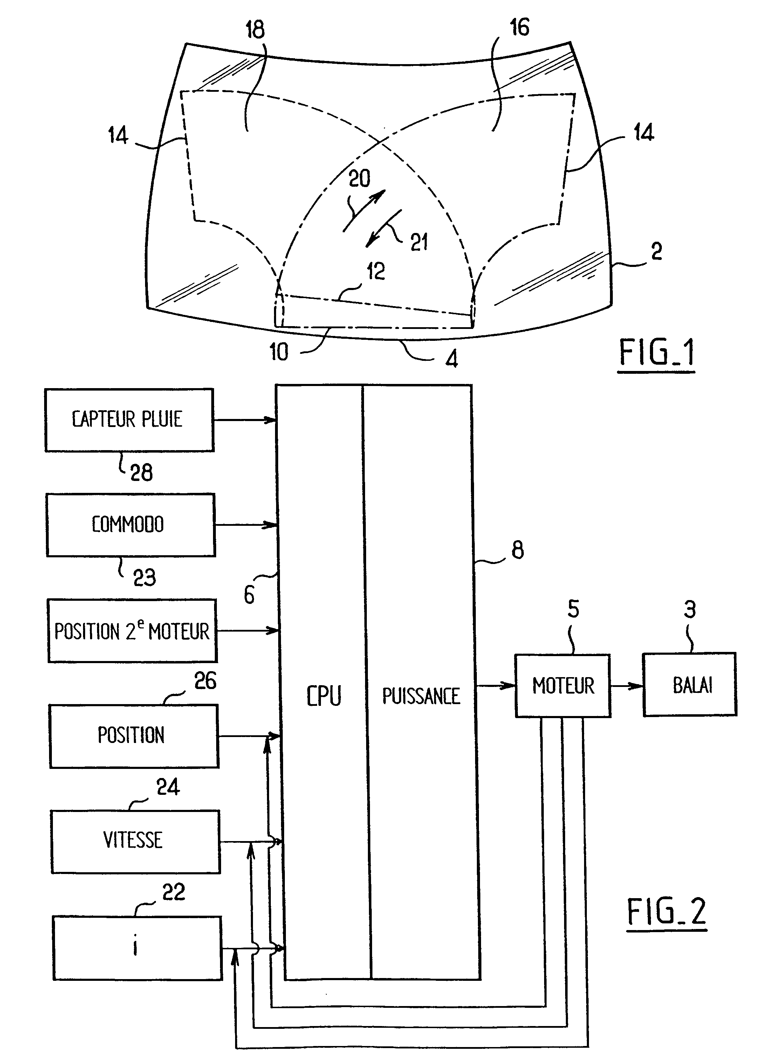

En référence à la figure 1, on a illustré les trajectoires respectives des deux balais. On distingue plusieurs positions singulières de chaque balai :
- position 10 d'arrêt parking (AP) : c'est la position de rangement ;
- position 12 d'arrêt fixe (AF) ;
- position 14 opposée à l'arrêt fixe (OAF) : les balais sont à leur débattement maximum, généralement en partie haute du pare-brise.

Le côté conducteur a été repéré par 16, alors que le côté passager est référencé 18.

La trajectoire de chaque balai comprend une course montante ou balayage sortant 20 au cours de laquelle le balai se déplace de la position AF à la position OAF, et une course descendante ou balayage rentrant 21, de la position OAF à la position AF.

Le système d'essuie-glace est commandable notamment depuis le tableau de bord du véhicule au moyen d'un organe de commande classique du type commodo 23. Le commodo permet de façon connue en soi de choisir différents modes de fonctionnement du système d'essuie-glace :
- mode grande vitesse ou GV, au cours duquel les balais parcourent le pare-brise à grande vitesse en va-et-vient sans pause perceptible ;
- mode petite vitesse ou PV, au cours duquel les balais parcourent le pare-brise à petite vitesse en va-et-vient sans pause perceptible. Les termes « grande vitesse » et « petite vitesse » sont à comprendre ici l'un par rapport à l'autre : à chacun de ces modes est associée une valeur de consigne de vitesse ainsi qu'une plage de valeurs admissibles pour la vitesse du balai (ou du moteur). Ces deux plages sont disjointes ;
- mode intermittent ou INT, au cours duquel les balais parcourent le pare-brise à petite vitesse, en va-et-vient en ménageant une pause perceptible de quelques dixièmes de seconde entre chaque aller et retour ; et
- arrêt.

Le présent système permet en outre de sélectionner avec le commodo 23 un mode automatique par lequel le conducteur s'en remet entièrement à la CPU 6 pour la commande du système, sans imposer un mode a priori préférentiel.

Lorsque l'un des modes GV, PV ou INT est sélectionné sur le commodo 23, la CPU 6 applique ce mode par défaut mais modifie la vitesse et/ou le mode de fonctionnement si nécessaire.

Le module électronique 6 comprend des moyens 22 connus en soi pour, au moyen d'une dérivation, mesurer l'intensité i d'un courant électrique alimentant le moteur 5 et pour calculer une moyenne des mesures d'intensité i sur une période de temps prédéterminée. L'intensité i est généralement étroitement fonction de la vitesse de rotation du rotor du moteur. Connaître i, c'est donc avoir le moyen de connaître avec précision la vitesse v du moteur et celle du balai associé. Alternativement ou simultanément, on pourra prévoir de mesurer directement la vitesse du rotor au moyen d'un capteur de vitesse 24 connu en soi. Ces deux moyens, relativement redondants, ont été illustrés sur la figure 2. Le module électronique 6 est également associé à un capteur à effet Hall 26 repérant la position instantanée du rotor autour de son axe de rotation.

Les moyens de mesure d'intensité 22, de vitesse 24 et de position 26 sont associés à la CPU 6 au sein de boucles d'asservissement respectives entièrement numériques d'un type PID connu en soi. Le moteur 5 est ainsi asservi en vitesse et en position. Dans le présent mode de réalisation, on donne priorité à l'asservissement en vitesse sur l'asservissement en position.

On va maintenant décrire plus en détails l'asservissement en vitesse. La CPU 6 est programmée pour mesurer l'intensité du courant i durant un intervalle de temps prédéterminé, puis faire la moyenne des mesures. Cet intervalle de temps a par exemple une durée de quelques ms. Cette mesure a lieu à chaque aller et retour du balai en vue de commander la vitesse du balai lors de l'aller et retour suivant. L'intervalle de temps choisi ici correspond à une position du rotor autour de son axe qui correspond elle-même à la course descendante 21 du balai avec le balai situé environ à mi-course de la position AOF (qu'il vient de quitter) et de la position AF (vers laquelle il se dirige). Ce point de la trajectoire du balai est choisi pour les raisons suivantes : la trajectoire étant descendante, le balai est sollicité en sens contraire par le flux d'air généré par la vitesse du véhicule. De plus, le point à mi-course correspond classiquement à une partie de la fonction de transfert de l'embiellage qui est linéaire.

L'asservissement en vitesse comprend des seuils associés aux modes de fonctionnement respectifs. Les seuils définissent ici des plages de vitesse différentes se recouvrant légèrement. Ainsi, au mode GV est associé un seuil GV bas. Au mode PV est associé un seuil PV haut et un seuil PV bas. Au mode INT est associé un seuil INT haut et un seuil INT bas. Et on a :
Seuil PV haut > Seuil GV bas > Seuil INT haut > Seuil PV bas > Seuil INT bas

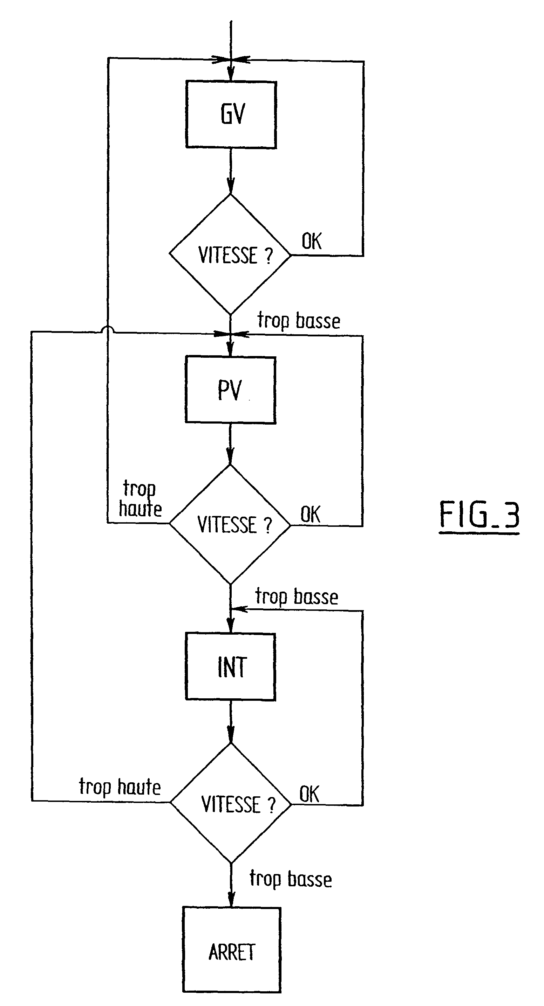

En présence d'un mode de fonctionnement courant (c'est-à-dire en cours), le système assure un asservissement en vitesse pour tendre à maintenir la vitesse du moteur (et du balai) à la valeur de consigne de vitesse correspondant au mode courant. Par ailleurs, comme on l'a vu, le système obtient à chaque aller et retour une valeur moyenne de vitesse effective. Il compare alors cette valeur au seuil ou aux seuils précités associés au mode courant. Si la valeur franchit l'un des seuils, cela signifie que la vitesse du balai est inadaptée aux conditions de vitre associées au déplacement du balai sur le pare-brise. Par exemple, si le balai a une vitesse trop élevée, cela signifie que la quantité d'eau sur le pare-brise est importante et/ou que le flux d'air généré par le déplacement du véhicule est peu important. Au contraire, si le balai a une vitesse trop lente, il est probable que la quantité d'eau est faible et génère des frottements importants du balai sur la vitre, ou que le flux d'air est très important et ralentit le balai. Le système décide alors de modifier le mode courant dans le sens associé au seuil dépassé. Ainsi, si en mode PV, la valeur de vitesse est inférieure au seuil PV bas, le système commande le mode INT comme mode courant. Au contraire, si la valeur de vitesse est supérieure au seuil PV haut, le système commande le mode GV. Si la valeur de vitesse ne dépasse pas le ou les seuils associés au mode courant, le système ne modifie pas le mode courant et se contente d'ajuster la vitesse. Ce fonctionnement du système est illustré sur l'organigramme de la figure 3.

Lorsque le système décide un tel changement de mode, il attend que les balais soient en position opposée à l'arrêt fixe OAF, pour ne pas perturber la régularité du mouvement des balais vue par le conducteur.

Le système comprend en outre un capteur de pluie 28 d'un type connu en soi comprenant un moyen de détection de l'existence de pluie sur le véhicule. Ce capteur peut être associé au système de façon à déclencher la mise en route des moteurs d'essuyage et/ou leur arrêt lorsque la pluie cesse.

Le système contrôle également la synchronisation des mouvements des deux moteurs (et des deux balais). En effet, comme illustré sur la figure 2, la CPU associée à chaque moteur d'essuyage reçoit régulièrement une information sur la position du rotor de l'autre moteur, ce qui correspond à une certaine position du deuxième balai. Le système peut donc être prévu pour comparer les positions des deux rotors et en déduire s'il existe un risque de collision entre les deux balais. Toutefois, lorsque les informations sur les positions des deux rotors peuvent être reçues très fréquemment, par exemple toutes les 3,5 ms, il suffit de vérifier la conformité de la position de chaque rotor avec une valeur nominale ou de consigne correspondant à l'instant de la mesure. Lorsque la différence entre la position mesurée et la consigne dépasse, sur l'un des rotors, un seuil prédéterminé, on commande une modification de la vitesse du moteur associé en vue de compenser ce défaut de positionnement.

Dans chaque sous-ensemble, le système comporte des moyens de mesure et/ou de calcul de la tension aux bornes du moteur d'essuyage 5. Il est configuré pour déterminer à intervalles de temps réguliers une valeur de la tension aux bornes. Au cours de la surveillance de la tension du moteur, on compare à intervalles de temps réguliers la valeur de tension du courant avec un seuil de saturation prédéterminé de telle sorte que lorsque la tension atteint ce seuil, cela signifie que le moteur est bloqué. Si c'est le cas, le système obtient un arrêt du moteur concerné, voire des deux moteurs. Le système peut être configuré pour, dans ces conditions, commander un redémarrage du moteur à intervalles de temps réguliers, par exemple toutes les cinq secondes. Cela est particulièrement utile lorsque l'origine du blocage est intempestive et provisoire, par exemple un obstacle dans la trajectoire du balai. Ainsi, le système se protège des destructions de ses moteurs en se comportant comme si une protection thermique était intégrée dans le moteur.

On peut aussi prévoir que, dans un fonctionnement non automatique, on arrête le balayage du système lorsque la vitesse moyenne de battement est inférieure à un seuil pendant un temps supérieur à une durée donnée. Le système redémarre ensuite de façon cyclique, avec une période de répétition définie.

On peut prévoir que, dans le cas d'un blocage détecté au moment du début d'une phase de balayage, en position AF, le système cherche à redémarrer de façon cyclique, avec la même période de répétition. Dans le cas d'un blocage pendant un balayage, le système procède en deux temps : il essaie de redémarrer en balayage normal, depuis les positions des moteurs en se recalant éventuellement ; si le blocage réapparaît dans le même cycle ou le cycle suivant, on passe en un mode dégradé prédéterminé.

Mis à part la commande de changements de mode ou de vitesse liés aux changements des conditions de vitre, le système est également prévu pour commander la vitesse du moteur suivant la position du balai sur sa trajectoire, indépendamment d'un éventuel changement des conditions de vitre. Notamment, il commande le moteur de sorte que le balai ralentit à l'approche de chaque position d'extrémité AF ou AOF de chaque course de sa trajectoire. Plus précisément, le balai a une première vitesse constante sur une plus grande partie médiane de chaque course, puis a une deuxième vitesse constante, inférieure à la première vitesse, sur une partie suivante de la course adjacente à la position d'extrémité vers laquelle il se dirige.

Ce mode de fonctionnement est illustré sur la figure 3 sur un cycle de 360° du moteur correspondant à un aller et retour du balai. La course montante 20 du balai commence depuis la position d'arrêt fixe AF par une phase 30 à accélération constante, suivie d'une phase 32 à ladite première vitesse, puis une phase 34 à décélération constante et une phase 36 à la deuxième vitesse jusqu'à la position OAF. La même succession se reproduit pour la course descendante 21 vers la position AF. Ce procédé de commande élimine ou réduit les dépassements des positions AF et OAF aux extrémités de la trajectoire, fréquents dans l'art antérieur, notamment dans les conditions de vitre mouillée. Ce principe de commande permet de limiter les dépassements ou surangles à 1,5° à chaque extrémité. En retour, on peut ainsi étendre au maximum la zone essuyée nominale.

Le cas échéant, le système pourra également recevoir des ordres d'un ordinateur de bord du véhicule ou body contrôleur et en tenir compte pour la commande des balais.

Dans ce cas, à partir du capteur de position analogique, la CPU assure tous les calculs d'asservissement du moteur et génère les commandes sous forme PWM de l'étage de puissance 8.

En fonctionnement normal, un seul sens de rotation est autorisé pour le moteur.

Comme on l'a vu, la surveillance assure :
- la non collision des balais en échantillonnant leur position de façon suffisamment fréquente et en comparant le différentiel des erreurs par rapport au nominal de chacun des balais ;
- une régulation de la vitesse moyenne de balayage pour limiter les phénomènes d'acyclisme ;
- un passage automatique entre les modes GV, PV, INTERMITTENCE, et ARRET en cherchant à respecter le mode demandé au commodo ; et
- la protection du système contre les surcharges pouvant entraîner sa destruction.

Une position de rangement des balais est définie par deux valeurs des angles moteurs, non nécessairement coïncidantes avec les trajectoires nominales. Cette position est atteinte lors de l'arrêt du balayage, en mode arrêt, et pendant les arrêts lors de l'intermittence, sans discontinuité dans le mouvement des balais.

Les deux modules 6 communiquent entre eux pour échanger toutes les informations nécessaires à la régulation, au décodage des informations du commodo 23, du body-contrôleur ou du capteur de pluie 28. En plus de cette liaison, on peut prévoir que chaque CPU reçoit de la CPU opposée :
- une copie de la position du capteur, pour vérifier l'intégrité de la communication entre les CPU ;
- une commande lui imposant de rendre la main lors de la détection d'un mauvais fonctionnement ;
- une commande de l'étage de puissance 8 permettant de contrôler la rotation pour dégager la zone de collision, et fonctionner en un mode dégradé ; et/ou
- une alimentation permettant le fonctionnement du capteur relu à distance, et la rotation du moteur en mode dégradé.

Un certain nombre de données peuvent être téléchargées sur chaîne de montage dans la CPU et fonction du véhicule. Il s'agit par exemple des données suivantes :
- vitesse de rotation nominale GV ;
- vitesse de rotation nominale PV ;
- vitesse avant retournement ;
- position du ralentissement balayage sortant ;
- position de ralentissement balayage rentrant ;
- position parking CP ; et
- intervalle d'intermittence.

On pourra prévoir qu'au cours de la commande, le système reçoit une donnée sur la vitesse de déplacement du véhicule et en tient compte pour la commande de l'essuie-glace.

## Revendications

1. Procédé de commande d'un moteur (5) d'essuie-glace de véhicule, comprenant les étapes consistant à :
- mesurer au moins une grandeur liée à un paramètre de fonctionnement du moteur et susceptible d'avoir plusieurs valeurs non nulles ;
- effectuer une comparaison de la grandeur avec un seuil prédéterminé (PV haut, GV bas, INT haut, PV bas, INT bas) ; et
- commander le moteur en fonction d'un résultat de la comparaison,
**caractérisé en ce qu'**on mesure la grandeur lorsqu'un rotor du moteur occupe au moins une position de détermination correspondant à un point de détermination prédéterminé sur une trajectoire d'un balai entraîné par le moteur.

2. Procédé selon la revendication 1, **caractérisé en ce que**, le moteur (5) étant relié au balai par un embiellage, le point de détermination se trouve dans une zone linéaire d'une fonction de transfert de l'embiellage.

3. Procédé selon la revendication 1 ou 2, **caractérisé en ce que** le paramètre est une intensité (i) d'un courant électrique d'alimentation du moteur.

4. Procédé selon l'une quelconque des revendications 1 à 3, **caractérisé en ce que** le paramètre est une vitesse du moteur (5).

5. Procédé selon l'une quelconque des revendications 1 à 4, **caractérisé en ce que** le paramètre est une position d'un rotor du moteur (5).

6. Procédé selon l'une quelconque des revendications 1 à 5, **caractérisé en ce que** la grandeur est une moyenne de plusieurs valeurs du paramètre.

7. Procédé selon l'une quelconque des revendications 1 à 6, **caractérisé en ce qu'**on effectue des comparaisons de la grandeur avec un seuil inférieur (PV haut, INT haut) et un seuil supérieur (GV bas, PV bas, INT bas) prédéterminés et on commande le moteur en fonction de résultats des comparaisons.

8. Procédé selon l'une quelconque des revendications 1 à 7, **caractérisé en ce que**, le moteur étant agencé pour fonctionner suivant au moins deux modes de fonctionnement (GV, PV, ARRET, INT) associés à des plages de vitesses différentes et/ou à des procédures différentes, au moins l'un parmi les seuils inférieur et supérieur est prédéterminé en fonction d'un mode de fonctionnement courant du moteur.

9. Procédé selon l'une quelconque des revendications 1 à 8, **caractérisé en ce qu'** on mesure la grandeur lorsqu'un rotor du moteur a un sens de rotation correspondant à un sens de déplacement prédéterminé sur une trajectoire d'un balai entraîné par le moteur.

10. Procédé selon la revendication 9, **caractérisé en ce que** le sens de déplacement est celui dans lequel le balai se déplace vers le bas d'un pare-brise du véhicule.

11. Procédé selon l'une quelconque des revendications 1 à 10, **caractérisé en ce qu'**on commande le moteur (5) en fonction d'une donnée fournie par un organe de contrôle (23) de l'essuie-glace accessible à un conducteur du véhicule.

12. Procédé selon l'une quelconque des revendications 1 à 11, **caractérisé en ce qu'**on commande le moteur (5) en fonction d'une donnée fournie par un capteur de pluie (28).

13. Procédé selon l'une quelconque des revendications 1 à 12, **caractérisé en ce qu'**on commande le moteur (5) en fonction d'une donnée représentative d'une vitesse de déplacement du véhicule.

14. Procédé selon l'une quelconque des revendications 1 à 13, **caractérisé en ce qu'**on commande deux moteurs (5) d'essuie-glace du véhicule, et **en ce qu'**il comprend les étapes consistant à :
- déterminer des positions de rotors respectifs des moteurs ;
- effectuer une comparaison des positions entre elles et/ou des comparaisons des positions avec des seuils de position respectifs prédéterminés ; et
- commander au moins l'un des moteurs en fonction d'un résultat de la comparaison et/ou des résultats des comparaisons.

15. Procédé selon l'une quelconque des revendications 1 à 14, **caractérisé en ce que**, le paramètre étant une tension électrique à des bornes du moteur, on effectue une comparaison de la grandeur avec un seuil de saturation prédéterminé, et on commande un arrêt du moteur en fonction d'un résultat de la comparaison.

16. Procédé selon la revendication 15, **caractérisé en ce qu'**on commande un redémarrage du moteur après un intervalle de temps prédéterminé.

17. Procédé selon l'une quelconque des revendications 1 à 16, **caractérisé en ce que** l'étape de commande comprend le fait de modifier une vitesse du moteur.

18. Procédé selon l'une quelconque des revendications 1 à 17, **caractérisé en ce que** le moteur étant agencé pour fonctionner suivant au moins deux modes de fonctionnement (GV, PV, ARRET, INT) associés à des plages de vitesses différentes et/ou à des procédures différentes, l'étape de commande comprend le fait de modifier une vitesse du moteur, et éventuellement, de changer un mode de fonctionnement courant du moteur.

19. Procédé selon l'une quelconque des revendications 1 à 18, **caractérisé en ce qu'**on commande le moteur lorsqu'un rotor du moteur occupe une position de commande correspondant à un point de commande (14) prédéterminé sur une trajectoire d'un balai entraîné par le moteur.

20. Procédé selon la revendication 19, **caractérisé en ce que** le point de commande (14) est une extrémité de la trajectoire du balai.

21. Procédé selon l'une quelconque des revendications 1 à 20, **caractérisé en ce qu'**on commande le moteur (5) de sorte que, pour une course (20) d'un balai entraîné par le moteur dans un unique sens de déplacement d'une première extrémité (AF) à une deuxième extrémité (AOF) de la course, le moteur a une première vitesse constante sur une première plus grande partie (32) de la course, puis une deuxième vitesse constante (36) inférieure à la première vitesse (32) sur une deuxième partie de la course faisant suite à la première partie et précédant la deuxième extrémité (AOF).

22. Dispositif de commande d'un moteur d'essuie-glace de véhicule, comprenant :
- des moyens pour mesurer au moins une grandeur liée à un paramètre de fonctionnement du moteur et susceptible d'avoir plusieurs valeurs non nulles ;
- des moyens pour effectuer une comparaison de la grandeur avec un seuil prédéterminé ; et
- des moyens pour commander le moteur en fonction d'un résultat de la comparaison,
**caractérisé en ce que** les moyens pour mesurer ladite au moins une grandeur sont agencés pour mesurer la grandeur lorsqu'un rotor du moteur occupe au moins une position de détermination correspondant à un point de détermination prédéterminé sur une trajectoire d'un balai entraîné par le moteur.

23. Motoréducteur pour un essuie-glace de véhicule, **caractérisé en ce qu'**il comprend un dispositif de commande selon la revendication 22.

## Patentansprüche

1. Steuerverfahren eines Motors (5) für einen Kraftfahrzeug-Scheibenwischer mit den Stufen, bestehend aus:
- Messung wenigstens einer mit einem Funktionsparameter des Motors verbundenen Größe, die mehrere Werte ungleich Null haben kann;
- Durchführung eines Vergleichs der Größe mit einem vorbestimmten Schwellenwert (oberer PV, unterer GV, oberer INT, unterer PV, unterer INT), und
- Steuerung des Motors in Abhängigkeit eines Ergebnisses des Vergleichs,
**dadurch gekennzeichnet, dass** man die Größe misst, wenn ein Rotor des Motors wenigstens eine einem vorbestimmten Bestimmungspunkt auf einer Bahn eines durch den Motor angetriebenen Wischarms entsprechende Bestimmungsposition einnimmt.

2. Verfahren gemäß Anspruch 1, **dadurch gekennzeichnet, dass** der Motor (5) durch einen Stangensatz mit dem Wischarm verbunden ist, der Bestimmungspunkt sich in einem linearen Bereich einer Transferfunktion des Stangensatzes befindet.

3. Verfahren gemäß Anspruch 1 oder 2, **dadurch gekennzeichnet, dass** der Parameter eine Intensität (i) eines Versorgungsstroms des Motors ist.

4. Verfahren gemäß Anspruch 1 bis 3, **dadurch gekennzeichnet, dass** der Parameter eine Geschwindigkeit des Motors (5) ist.

5. Verfahren gemäß Anspruch 1 bis 4, **dadurch gekennzeichnet, dass** der Parameter eine Position eines Rotors des Motors (5) ist.

6. Verfahren gemäß Anspruch 1 bis 5, **dadurch gekennzeichnet, dass** die Größe ein Durchschnitt mehrerer Werte des Parameters ist.

7. Verfahren gemäß Anspruch 1 bis 6, **dadurch gekennzeichnet, dass** man Vergleiche der Größe mit einem vorbestimmten unteren Schwellenwert (oberer PV, oberer INT) und einem vorbestimmten oberen Schwellenwert (unterer GV, unterer PV, unterer INT) vornimmt und den Motor in Abhängigkeit von Ergebnissen der Vergleiche steuert.

8. Verfahren gemäß Anspruch 1 bis 7, **dadurch gekennzeichnet, dass** der Motor angeordnet ist, um gemäß wenigstens zwei unterschiedlichen Geschwindigkeitsbereichen und / oder unterschiedlichen Verfahren zugeordneten Betriebsmodi (GV, PV, ARRET [Stillstand], INT) zu arbeiten, wenigstens einer der unteren und oberen Schwellenwerte in Abhängigkeit eines laufenden Betriebsmodus des Motors vorbestimmt wird.

9. Verfahren gemäß Anspruch 1 bis 8, **dadurch gekennzeichnet, dass** man die Größe misst, wenn ein Rotor des Motors eine einer auf einer Bahn eines durch den Motor angetriebenen Wischarms vorbestimmten Verschiebungsrichtung entsprechende Rotationsrichtung hat.

10. Verfahren gemäß Anspruch 9, **dadurch gekennzeichnet, dass** die Verschiebungsrichtung die Richtung ist, in der der Wischarm sich zur Unterseite einer Windschutzscheibe des Fahrzeugs verschiebt.

11. Verfahren gemäß Anspruch 1 bis 10, **dadurch gekennzeichnet, dass** man den Motor (5) in Abhängigkeit einer durch ein für den Fahrer des Fahrzeugs zugängliches Kontrollorgan (23) des Scheibenwischers gelieferte Angabe steuert.

12. Verfahren gemäß Anspruch 1 bis 11, **dadurch gekennzeichnet, dass** man den Motor (5) in Abhängigkeit einer durch einen Regensensor (28) gelieferte Angabe steuert.

13. Verfahren gemäß Anspruch 1 bis 12, **dadurch gekennzeichnet, dass** man den Motor (5) in Abhängigkeit einer eine Verschiebungsgeschwindigkeit des Fahrzeugs darstellenden Angabe steuert.

14. Verfahren gemäß Anspruch 1 bis 13, **dadurch gekennzeichnet, dass** man zwei Motoren (5) für Scheibenwischer des Fahrzeugs steuert und dass es die Stufen umfasst, bestehend aus:
- Bestimmung der jeweiligen Rotorpositionen des Motors;
- Durchführung eines Vergleichs der Positionen untereinander und / oder Vergleiche der Position mit jeweiligen vorbestimmten Positions-Schwellenwerten; und
- Steuerung wenigstens einer der Motoren in Abhängigkeit eines Ergebnisses des Vergleichs und /oder der Ergebnisse der Vergleiche.

15. Verfahren gemäß Anspruch 1 bis 14, **dadurch gekennzeichnet, dass** man, da der Parameter eine elektrische Spannung an Anschlussklemmen des Motors ist, einen Vergleich der Größe mit einem vorbestimmten Sättigungs-Schwellenwert durchführt und einen Stillstand des Motors in Abhängigkeit eines Ergebnisses des Vergleichs steuert.

16. Verfahren gemäß Anspruch 15, **dadurch gekennzeichnet, dass** man ein Wieder-Anspringen des Motors nach einem vorbestimmten Zeitintervall steuert.

17. Verfahren gemäß Anspruch 1 bis 16, **dadurch gekennzeichnet, dass** die Steuerstufe die Änderung einer Geschwindigkeit des Motors umfasst.

18. Verfahren gemäß Anspruch 1 bis 17, **dadurch gekennzeichnet, dass**, da der Motor angeordnet ist, um gemäß wenigstens zwei unterschiedlichen Geschwindigkeitsbereichen und / oder unterschiedlichen Verfahren zugeordneten Betriebsmodi (GV, PV, ARRET [Stillstand], INT) zu arbeiten, die Steuerstufe die Änderung einer Geschwindigkeit des Motors und eventuell die Änderung eines laufenden Betriebsmodus des Motors umfasst.

19. Verfahren gemäß Anspruch 1 bis 18, **dadurch gekennzeichnet, dass** man den Motor steuert, wenn ein Rotor des Motors eine einem auf einer Bahn eines durch den Motor angetriebenen Wischarms vorbestimmte Steuerpunkt (14) entsprechende Steuerposition einnimmt.

20. Verfahren gemäß Anspruch 19, **dadurch gekennzeichnet, dass** der Steuerpunkt (14) ein Ende der Bahn des Wischarms ist.

21. Verfahren gemäß Anspruch 1 bis 20, **dadurch gekennzeichnet, dass** man den Motor (5) derart steuert, dass bei einem Lauf (20) eines durch den Motor in einer einzigen Verschiebungsrichtung von einem ersten Ende (AF) zu einem zweiten Ende (AOF) des Laufes angetriebenen Wischarms der Motor eine erste konstante Geschwindigkeit auf einem ersten, größeren Teil (32) des Laufs hat, dann eine zweite konstante Geschwindigkeit (36), die niedriger ist als die erste Geschwindigkeit (32) auf einem zweiten, auf den ersten Teil folgenden und dem zweiten Ende (AOF) voranstehenden Teil des Laufs.

22. Steuervorrichtung eines Motors für einen Kraftfahrzeug-Scheibenwischer, umfassend:
- Mittel zum Messen wenigstens einer mit einem Betriebsparameter des Motors verbundenen Größe, die mehrere Werte ungleich Null haben kann;
- Mittel zum Durchführen eines Vergleichs der Größe mit einem vorbestimmten Schwellenwert; und
- Mittel zum Steuern des Motors in Abhängigkeit eines Ergebnisses des Vergleichs,
**dadurch gekennzeichnet, dass** die Mittel zum Messen der wenigstens einen genannten Größe angeordnet sind, um die Größe zu messen, wenn ein Rotor des Motors wenigstens eine einem vorbestimmten Bestimmungspunkt auf einer Bahn eines durch den Motor angetriebenen Wischarms entsprechende Bestimmungsposition einnimmt.

23. Getriebemotor für einen Kraftfahrzeug-Scheibenwischer, **dadurch gekennzeichnet, dass** er eine Steuervorrichtung gemäß Anspruch 22 umfasst.

## Claims

1. A method of controlling a vehicle wiper motor (5), comprising the steps consisting of:
- measuring at least one quantity related to an operating parameter of the motor and liable to have several non-zero values;
- making a comparison of the quantity with a predetermined threshold (high PV, low GV, high INT, low PV, low INT); and
- controlling the motor according to a result of the comparison,
**characterised in that** the quantities measured when a rotor of the motor occupies at least one determination position corresponding to a predetermined determination point on a path of a blade driven by the motor.

2. Method according to Claim 1, **characterised in that**, the motor (5) being connected to the blade by a linkage, the determination point is situated in a linear area of a transfer function of the linkage.

3. A method according to Claim 1 or 2,
**characterised in that** the parameter is an intensity (i) of an electric current supplying the motor.

4. A method according to any one of Claims 1 to 3, **characterised in that** the parameter is a speed of the motor (5).

5. A method according to any one of Claims 1 to 4, **characterised in that** the parameter is a position of a rotor of the motor (5).

6. A method according to any one of Claims 1 to 5, **characterised in that** the quantity is an average of several values of the parameter.

7. A method according to any one of Claims 1 to 6, **characterised in that** comparisons are made of the quantity with a predetermined lower threshold (high PV, high INT) and upper threshold (low GV, low PV, low INT) and the motor is controlled according to the results of the comparisons.

8. A method according to any one of Claims 1 to 7, **characterised in that**, the motor being arranged to function according to at least two operating modes (GV, PV, STOP, INT) associated with different speed ranges and/or different procedures, at least one from amongst the lower and upper thresholds is predetermined according to a current operating mode of the motor.

9. A method according to any one of Claims 1 to 8, **characterised in that** the quantity is measured when a rotor of the motor has a direction of rotation corresponding to a predetermined direction of movement on a path of a blade driven by the motor.

10. A method according to Claim 9, **characterised in that** the direction of movement is the one in which the blade moves towards the bottom of a windscreen of the vehicle.

11. A method according to any one of Claims 1 to 10, **characterised in that** the motor (5) is controlled according to a data item supplied by a control device (23) for the wiper accessible to a driver of the vehicle.

12. A method according to any one of Claims 1 to 11, **characterised in that** the motor (5) is controlled according to a data item supplied by a rain sensor (28).

13. A method according to any one of Claims 1 to 12, **characterised in that** the motor (5) is controlled according to a data item representing a speed of movement of the vehicle.

14. A method according to any one of Claims 1 to 13, **characterised in that** two wiper motors (5) of the vehicle are controlled, and **in that** it comprises the steps consisting of:
- determining positions of respective rotors of the motors;
- making a comparison of the positions with each other and/or comparisons of the positions with predetermined respective position thresholds; and
- controlling at least one of the motors according to a result of the comparison and/or the results of the comparisons.

15. A method according to any one of Claims 1 to 14, **characterised in that**, the parameter being an electrical voltage at terminals of the motor, a comparison is made of the quantity with a predetermined saturation threshold, and a stoppage of the motor is demanded according to a result of the comparison.

16. A method according to Claim 15,
**characterised in that** a re-starting of the motor is demanded after a predetermined interval of time.

17. A method according to any one of Claims 1 to 16, **characterised in that** the control step comprises the fact of modifying a speed of the motor.

18. A method according to any one of Claims 1 to 17, **characterised in that**, the motor being arranged to function according to at least two operating modes (GV, PV, STOP, INT) associated with different speed ranges and/or different procedures, the control step comprises the fact of modifying a speed of the motor, and possibly changing a current operating mode of the motor.

19. A method according to any one of Claims 1 to 18, **characterised in that** the motor is controlled when a rotor of the motor occupies a control position corresponding to a predetermined control point (14) on a path of a blade driven by the motor.

20. A method according to Claim 19,
**characterised in that** the control point (14) is one end of the path of the blade.

21. A method according to any one of Claims 1 to 20, **characterised in that** the motor (5) is controlled so that, for a travel (20) of a blade driven by the motor in a single direction of movement from a first end (AF) to a second end (AOF) of the travel, the motor has a first constant speed over a first larger part (32) of the travel and then a second constant speed (36) less than the first speed (32) over a second part of the travel following on from the first part and preceding the second end (AOF).

22. A control device for a vehicle wiper motor comprising:
- means for measuring at least one quantity related to an operating parameter of the motor and able to have several non-zero values;
- means for making a comparison of the quantity with a predetermined threshold; and
- means for controlling the motor according to a result of the comparison,
**characterised in that** the means for measuring the said at least one quantity are arranged to measure the quantity when a rotor of the motor occupies at least one determination position corresponding to a predetermined determination point on a path of a blade driven by the motor.

23. A geared motor for a vehicle wiper,
**characterised in that** it comprises a control device according to Claim 22.
